Europäisches Patentamt

(19) European Patent Office

Office européen des brevets

(11) Veröffentlichungsnummer: **0 011 590**
**B1**

(12) **EUROPÄISCHE PATENTSCHRIFT**

(45) Veröffentlichungstag der Patentschrift: 01.06.83

(21) Anmeldenummer: 79710098.9

(22) Anmeldetag: 12.10.79

(51) Int. Cl.³: **H 01 F 27/36,**
**H 01 F 40/10, H 02 B 1/18,**
**H 05 K 9/00**

(54) **Vollisolierte, metallgekapselte Hochspannungsschaltanlage mit Einleiterstromwandlern.**

(30) Priorität: 13.11.78 DE 7833955 U

(43) Veröffentlichungstag der Anmeldung:
28.05.80 Patentblatt 80/11

(45) Bekanntmachung des Hinweises auf die Patenterteilung:
01.06.83 Patentblatt 83/22

(84) Benannte Vertragsstaaten:
AT CH GB

(56) Entgegenhaltungen:
DE - C - 701 383
GB - A - 171 251
US - A - 3 173 116

(73) Patentinhaber: SIEMENS AKTIENGESELLSCHAFT
Berlin und München Wittelsbacherplatz 2
D-8000 München 2 (DE)

(72) Erfinder: Freygang, Hans-Joachim
Buchfinkweg 58
D-1000 Berlin 47 (DE)

Vollisolierte, metallgekapselte Hochspannungsschaltanlage mit Einleiterstromwandlern

Die Erfindung bezieht sich auf eine vollisolierte, metallgekapselte Hochspannungsschaltanlage, mit mehreren in der Metallkapsel verlaufenden Stromleitern, die mit nebeneinander angeordneten und Sekundärwicklungen tragenden Eisenkernen jeweils eine Einleiterstromwandler bilden, wobei jedem Eisenkern ein Schirm aus ferromagnetsichem und/oder elektrisch leitendem Werkstoff zugeordnet ist.

Bei einer bekannten Hochspannungsschaltanlage dieser Art (DE—B—23 25 443) sind die einzelnen Eisenkerne mit aufgebrachten Sekundärwicklungen der Einleiterwandler im eingezogenen Bereich von jeweils einem Stromleiter der Anlage zugeordneten Isolierkörpern untergebracht; in den eingezogenen Bereichen ist jeweils auch eine flächenhafte Elektrode angeordnet, die mit dem von ihr umfaßten Stromleiter einen Oberspannungskondensator eines kapazitiven Spannungsteilers bildet. Zur Entkopplung der Oberspannungskondensatoren voneinander ist jede flächenhafte Elektrode von einem Schirm umgeben, der aufgrund der Anordnung der Eisenkerne mit Sekundärwicklung auch diese umfaßt. Diese Schirme haben auch bezüglich der Einleiterstromwandler eine gewisse Schirmwirkung, weil sie eine Beeinflussung des Übertragungsverhaltens des jeweils einen Stromwandlers durch die Magnetfelder der Stromleiter der jeweils anderen Stromwandler vermindern.

Der Erfindung liegt die Aufgabe zugrunde, eine Veränderung des Übertragungsverhaltens von Stromwandlern in einer vollisolierten, metallgekapselten Hochspannungsschaltanlage mit mehreren in der Metallkapsel nebeneinander verlaufenden Stromleitern, die mit Sekundärwicklungen tragenden Eisenkerenen jeweils einen Einleiterstromwandler bilden, durch die Ströme in den jeweils benachbarten Leitern auf konstruktiv und fertigungstechnisch einfache Weise weitestgehend zu vermeiden.

Zur Lösung dieser Aufgabe sind erfindungsgemäß im Bereich von senkrecht zur Achse der Stromleiter verlaufenden Rändern an den axialen Enden jeweils benachbarter Schirme Kontaktbrücken vorhanden, die zusammen mit den Schirmen jeweils eine Kurzschlußwindung bilden.

Der wesentliche Vorteil besteht darin, daß der so gebildete Schirm ein Kurzschlußwindung darstellt, in der infolge Induktion ein Gegenfeld zu dem Steufeld des jeweils benachbarten Stromleiters erzeugt wird; der Einfluß von Streufeldern wird dadurch weitgehend kompensiert. Besteht der Schirm aus einem ferromagnetischem und elektrisch leitendem Werkstoff, dann wird die Schirmwirkung durch die ferromagnetischen Eigenschaften des Werkstoffes noch verstärkt.

Der Schirm kann gemäß der Erfindung in unterschiedlicher Weise ausgestaltet sein; so wird es als vorteilhaft angesehen, wenn der Schirm eine z. B. ebene Platte ist, die innen an der Metallkapsel gehalten ist. Der Vorteil einer solchen Ausbildung des Schirmes besteht vor allem in seiner leichten Herstellbarkeit; ein weiterer Vorteil ist darin zu sehen, daß er sich auch einfach an der Metallkapsel befestigen läßt, so daß bei Verwendung eines als ebene Platte ausgebildeten Schirmes in den Aufbau der einzelnen Einleiterstromwandler überhaupt nicht eingegriffen zu werden braucht.

Sind die Schirme fest mit der Metallkapsel und stabil miteinander verbunden, dann können sie auch zur Halterung der Eisenkerne mit Sekundärwicklungen innerhalb der Metallkapsel ausgenutzt werden.

Es wird ferner als vorteilhaft angesehen, wenn der Schirm der Außenkontur der Eisenkerne entsprechend geformt und außen um den jeweiligen Eisenkern an der dem benachbarten Stromleiter zugewandten Seite angeordnet ist. In diesem Fall ist nämlich die Möglichkeit gegeben, den Schirm am jeweiligen Eisenkern zu haltern, so daß die Einleiterstromwandler, so weit es ihren Aufbau aus Eisenkern und Sekundärwicklung betrifft, einschließlich der Schirme fertig montiert hergestellt werden können und zusätzliche Maßnahmen an der Metallkapsel zur Halterung der Schirme entfallen können.

Es kann ausreichend sein, nicht alle nebeneinander in einer Metallkapsel angeordneten Eisenkerne mit einem Schirm zu versehen; schon zur Vereinfachung der Fertigung und zur Vermeidung einer Typenvielfalt und auch zur Erhöhung der Schirmwirkung wird man jedoch vorteilhafterweise jeden Eisenkern außen mit einem Schirm umgeben.

Bestehen die Schirme mit einer der Außenkontur der Eisenkerne entsprechenden Gestalt aus ferromagnetischem Werkstoff, dann bilden sie vorteilhafterweise einen unterbrochenen Ring, dessen Unterbrechungsstelle auf der von dem benachbarten Stromleiter abgewandten Seite liegt. Dadurch wird infolge des verhältnismäßig langen Luftspaltes verhindert, daß der Nutzfluß des Eisenkernes des jeweiligen Einleiterstromwandlers in den Schirm übertritt, dort eine Sättigung hervorruft und somit die Schirmwirkung verringert.

Ist dagegen der Schirm aus elektrisch leitendem Weikstoff hergestellt, dann bildet er zweckmäßigerweise einen geschlossenen Ring, der den jeweiligen Eisenkern an seiner äußeren Mantelfläche vollständig umfaßt.

Unabhängig davon, ob der Schirm jeweils aus ferromagnetischem oder elektrisch leitendem Werkstoff hergestellt ist, kann er in unterschiedlicher Weise konstruktiv mit dem Aufbau aus Eisenkern und Sekundärwicklung verbunden sein. So kann der Schirm zwischen Eisenkern und Sekundärwicklung des jeweiligen Einleiterstromwandlers liegen, wobei jedoch darauf zu achten ist, daß ein ausreichender Abstand in radialer Richtung zwischen Eisenkern und Schirm vorgesehen wird. Dies bedingt ein verhältnismäßig starkes Anwachsen jedes Einleiterstromwandlers in radialer Richtung, so daß es aus Gründen eines möglichst geringen Raumbedarfs vorteilhafter erscheint, wenn der Schirm den Aufbau aus Eisenkern und Sekundärwicklung außen umfaßt.

Bestehen die verwendeten Schirme aus ferromagnetischem Material, dann ist es vorteilhaft, sie aus dünnen Blechen aufzubauen, weil dadurch die Schirmwirkung vergrößert wird.

Zur Erläuterung der Erfindung ist in

Fig. 1 ein Schnitt durch ein Ausführungsbeispiel einer Hochspannungsschaltanlage mit drei Einleiterstromwandlern mit aus jeweils zwei ebenen Platten mit Kontaktelementen gebildeten Schirmen, in

Fig. 2 ein Querschnitt durch eine Hochspannungsschaltanlage mit drei Einleiterstromwandlern mit außen auf dem Aufbau aus Eisenkern und Sekundärwicklung aufgebrachten Schirmen aus elektrisch leitendem Material, in

Fig. 3 ein Längsschnitt der Linie IV—IV durch dasselbe Ausführungsbeispiel und in

Fig. 4 ein weiteres Ausführungsbeispiel mit Einleiterstromwandlern aus zwischen Eisenkern und Sekundärwicklung angeordneten Schirmen aus ferromagnetischem Material wiedergegeben.

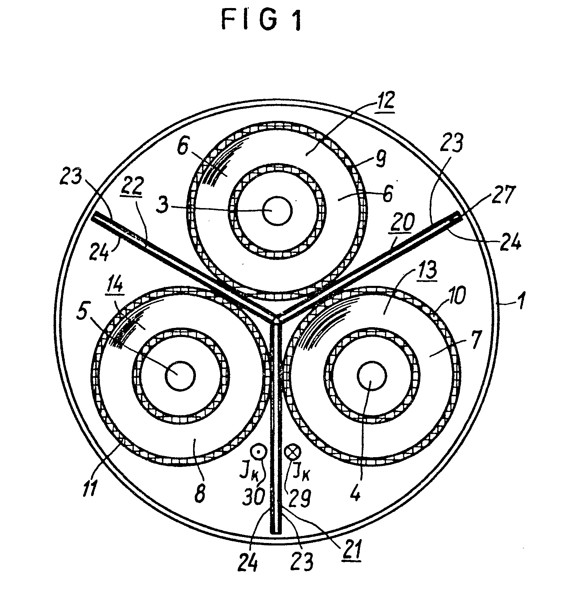

Bei dem Ausführungsbeispiel nach Fig. 1 bilden Hochspannungsleiter 3, 4 und 5 mit Eisenkernen 6, 7 und 8 sowie Sekundärwicklungen 9, 10 und 11 jeweils einen Einleiterstromwandler 12, 13 und 14.

Schirme 20, 21 und 22 sind eben ausgebildet und erstrecken sich vom Rand der Metallkapsel 1 bis zu ihrer Achse, um dort zusammen zu stoßen. Jeder der Schirme 20 bis 22 besteht aus einer ebenen Platte 23, zu der parallel eine weitere ebene Platte 24 angeordnet ist. Die Platten 23 und 24, die aus ferromagnetischem Werkstoff und/oder elektrisch leitendem Werkstoff bestehen können, sind an ihren senkrecht zu den Stromleitern 3 bis 5 verlaufenden Stirnseiten durch Kontaktelemente 27 nicht nur mechanisch, sondern auch elektrisch leitend miteinander verbunden. Jeder der Schirme 20 bis 22 bildet demzufolge eine Kurzschlußwindung, in der in Richtung der eingezeichneten Stromrichtungen 29 und 30 jeweils ein Kompensationsstrom $J_k$ fließt. Dieser Kompensationsstrom $J_k$ wird infolge von Induktion in den Schirmen 20 bis 22 hervorgerufen und erzeugt ein magnetisches Feld, das dem Streufeld der jeweils benachbarten Stromleiter 3 und 4 bzw. 4 und 5 bzw. 3 und 5 entgegengerichtet ist; dadurch tritt eine weitgehende Kompensation der Streufelder ein, so daß das Fehlerverhalten der einzelnen Einleiterstromwandler 12 bis 14 durch Streufelder der jeweils benachbarten Stromleiter weitgehend unbeeinflußt ist.

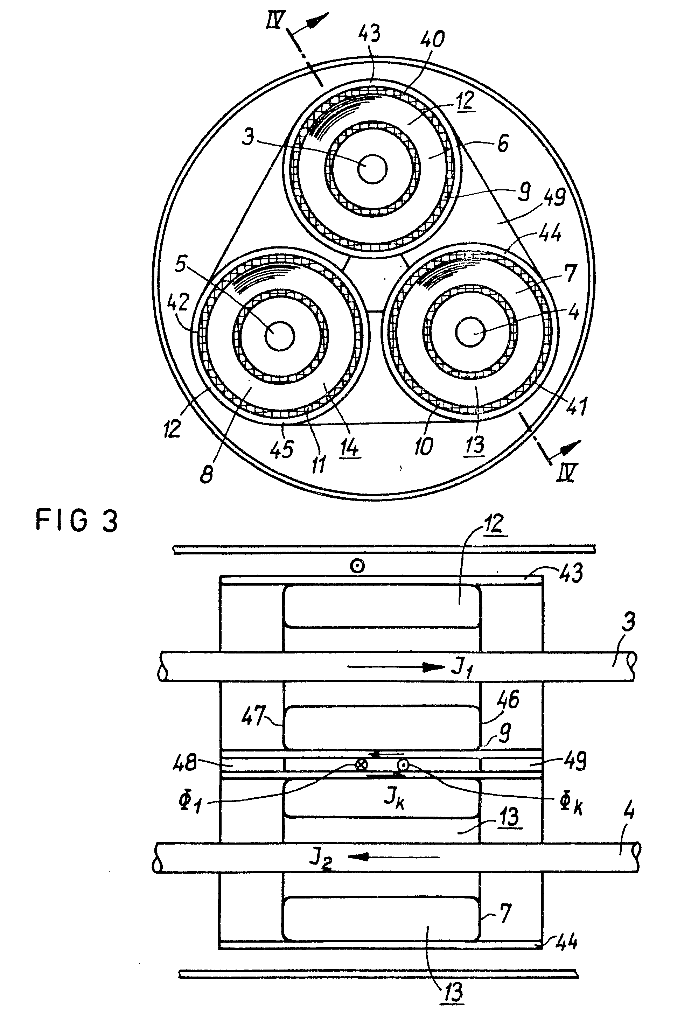

Bei dem in den Figuren 2 und 3 gezeigten Ausführungsbeispiel ist wiederum von den Stromleitern 3, 4 und 5 zusammen mit Eisenkernen 6, 7 und 8 sowie Sekundärwicklungen 9, 10 und 11 jeweils ein Einleiterstromwandler 12, 13 und 14 gebildet. Jeder Einleiterstromwandler 12 bis 14 ist an seiner äußeren Mantelfläche 40, 41 und 42 von einem Schirm 43, 44 und 45 umgeben, der einen geschlossenen ringförmigen Zylinder bildet. Jeder der Schirme 43 bis 45 besteht aus elektrisch leitendem Werkstoff.

Wie insbesondere Fig. 3 erkennen läßt, erstrecken sich die Zylinder 43 bis 45 über die Stirnseiten 46 und 47 der Sekundärwicklungen 9 bis 10 in Richtung der Stromleiter 3 bis 5 hinaus und sind an ihren Enden durch Kontaktbrücken 48 und 49 galvanisch miteinander verbunden. Es wird dadurch jeweils eine Kurzschlußwindung gebildet, die infolge eines in ihr induzierten Stromes ein magnetisches Gegenfeld zu dem jeweiligen Streufeld erzeugt.

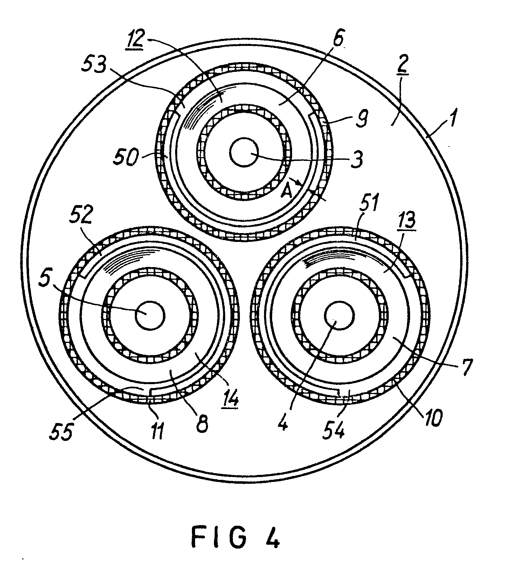

Fließt nämlich z. B. im Stromleiter 3 ein Strom $J_1$ in Richtung des dargestellten Pfeiles, dann wird von diesem Strom $J_1$ trotz des Schirmes 43 ein Magnetfluß außerhalb des Schirmes 43 im Bereich des anderen Einleiterstromwandlers 13 hervorgerufen; dieser Fluß ist in der Fig. 4 mit $\Phi_1$ bezeichnet. Infolge Induktion wird in der aus den Schirmen 43 und 44 und den Kontaktbrücken 48 und 49 gebildeten Kurzschlußwindung ein Kompensationsstrom $J_k$ hervorgerufen, der in Richtung der eingezeichneten Pfeile die Kurzschlußwindung durchfließt und dadurch einen Kompensationsfluß $\Phi_k$ erzeugt. Dieser Kompensationsfluß ist dem Fluß $\Phi_1$ entgegengerichtet und verstärkt somit die Abschirmwirkung der Schirme 43 und 44, indem er das in den Bereich des benachbarten Einleiterstromwandlers 13 hinreichende, vom Strom $J_1$ herrührende Magnetfeld schwächt.

Entsprechendes gilt hinsichtlich des Stromes $J_2$, der in Richtung des eingezeichneten Pfeiles durch den weiteren Stromleiter 4 fließen möge; auch in diesem Falle wird der durch den Strom $J_2$ erzeugte Fluß durch den Kompensationsfluß $\Phi_k$ weitgehend aufgehoben. Es zeigt sich also, daß bei Verwendung der Kontaktbrücken 48 und 49 die Wirkung der Schirme 43 und 44 noch verstärkt wird, weil ein zusätzlicher Kompensationsfluß $\Phi_k$ erzeugt wird.

Bei dem Ausführungsbeispiel nach Fig. 4 verlaufen in einer Metallkapsel 1 einer vollisolierten Hochspannungsschaltanlage 2 wiederum drei Hochspannungsleiter 3, 4 und 5, die mit Eisenkernen 6, 7 und 8 sowie Sekundärwicklung 9, 10 und 11 jeweils einen Einleiterstromwandler 12, 13 und 14 bilden. Jeder Einleiterstromwandler 12 bis 14 ist mit einem der Außenkontur der Kerne 6 bis 9 entsprechend geformten Schirm 50, 51 und 52 versehen. Die Schirme 50 bis 52 bestehen aus ferromagnetischem Material und bilden unterbrochene Ringe. Die Unterbrechungsstelle 53, 54 und 55 der Schirme 50 bis 52 befindet sich jeweils an der von den übrigen Stromleiter abgewandten Seite, um die Schirmwirkung nicht zu beeinträchtigen; die Unterbrechungsstellen 53 bis 55 sind vorgesehen, um einen Eisenweg mit möglichst hohem magnetischem Widerstand zu schaffen, damit der jeweilige Nutzfluß in den Kernen 6 bis 8 der einzelnen Einleiterstromwandler 12 bis 14 nicht in die Schirme 50 bis 52 übertritt und dort eine Sättigung hervorruft. Die Schirme 50 bis 52 sind jeweils im Abstand A von den Eisenkernen 6 bis 7 angeordnet, um die von den benachbarten Stromleiter herrührenden Magnetflüsse an dem jeweiligen Eisenkern 6 bis 8 vorbeileiten zu können.

Die einzelnen Schirme 50 bis 52 sind vorteilhafterweise aus einzelnen Blechen aufgebaut, um eine möglichst hohe Schirmwirkung zu erzielen. Es ist aber auch möglich, die Schirme aus Sintermaterial herzustellen.

Mit der Erfindung wird eine Hochspannungsschaltanlage mit mehreren nebeneinander in einer Metallkapsel angeordneten Einleiterstromwandlern vorgeschlagen, bei denen das Fehlerverhalten der einzelnen Stromwandler durch die Ströme bzw. die Magnetfelder benachbarter Stromleiter der Metallkapsel nicht beeinträchtigt wird.

## Patentansprüche

1. Vollisolierte, metallgekapselte Hochspannungsschaltanlage mit mehreren in der Metallkapsel (1) verlaufenden Stromleitern (3—5), die mit nebeneinander angeordneten und Sekundärwicklungen tragenden Eisenkernen (6—8) jeweils einen Einleiterstromwandler (12—14) bilden, wobei jedem Eisenkern ein Schirm (20—22; 43—45) aus ferromagnetischem und/oder elektrisch leitendem Werkstoff zugeordnet ist, dadurch gekennzeichnet, daß im Bereich von senkrecht zur Achse der Stromleiter (3, 4, 5) verlaufenden Rändern an den axialen Enden jeweils benachbarter Schirme (z. B. 43, 44) Kontaktbrücken (48, 49) vorhanden sind, die zusammen mit den Schirmen (43, 44) jeweils eine Kurzschlußwindung bilden.

2. Hochspannungsschaltanlage nach Anspruch 1, dadurch gekennzeichnet, daß jeder Schirm (20, 21, 22) eine Platte ist (Fig. 1).

3. Hochspannungsschaltanlage nach Anspruch 1, dadurch gekennzeichnet, daß jeder Schirm (43, 44, 45) einen geschlossenen Ring aus elektrisch leitendem Material bildet (Fig. 3/4).

4. Hochspannungsschaltanlage nach Anspruch 1, dadurch gekennzeichnet, daß jeder Schirm einen unterbrochenen Ring aus ferromagnetischem Werkstoff bildet, dessen Unterbrechungsstelle auf der von dem benachbarten Stromleiter abgewandten Seite liegt.

5. Hochspannungsschaltanlage nach einem der vorangehenden Ansprüche, dadurch gekennzeichnet, daß die Schirme (20, 21, 22) aus einzelnen Blechen aus ferromagnetischem Material bestehen (Fig. 1).

6. Vollisolierte, metallgekapselte Hochspannungsschaltanlage mit mehreren in der Metallkapsel (1) verlaufenden Stromleitern (3—5), die mit nebeneinander angeordneten und Sekundärwicklungen tragenden Eisenkernen (6—8) jeweils einen Einleiterstromwandler (12—14) bilden, wobei jedem Eisenkern ein Schirm (50—52) aus ferromagnetischem Werkstoff zugeordnet ist, dadurch gekennzeichnet, daß jeder Schirm (50, 51, 52) einen unterbrochenen Ring bildet, dessen Unterbrechungsstelle (53, 54, 55) auf der von dem benachbarten Stromleiter (3, 4, 5) abgewandten Seite liegt (Fig. 4).

## Revendications

1. Installation de distribution électrique haute tension, entièrement isolée et à blindage métallique, du type comportant plusieurs conducteurs de courant (3—5) s'étendant dans le blindage métallique (1) et formant, avec des noyaux de fer (6—8) disposés l'un à côté de l'autre et portant des enroulements secondaires, respectivement un transformateur d'intensité (12—14) à primaire unifilaire, un écran (20—22; 43—45) en un matériau ferromagnétique et/ou en un matériau électriquement conducteur étant associé à chaque noyau de fer, caractérisée par le fait que dans la partie des bords qui s'étendent perpendiculairement à l'axe des conducteurs de courant (3, 4, 5) sont prévus, aux extrémités axiales d'écrans voisins (par exemple 43, 44), des ponts de contacts (48, 49) qui forment respectivement avec les écrans (43, 44) une spire de court-circuit.

2. Installation de distribution électrique haute tension selon la revendication 1, caractérisée par le fait que chaque écran (20, 21, 22) est une plaque (figure 1).

3. Installation de distribution électrique haute tension selon la revendication 1, caractérisée par le fait que chaque écran (43, 44, 45) forme un anneau fermé en un matériau électriquement conducteur (figure 3/4).

4. Installation de distribution électrique haute tension selon la revendication 1, caractérisée par le fait que chaque écran forme un anneau interrompu en un matérieu ferromagnétique, dont l'emplacement de l'interruption est situé du côté éloigné du conducteur de courant voisin.

5. Installation de distribution électrique haute tension selon l'une des revendications précédentes, caractérisée par le fait que les écrans (20, 21, 22) sont constitués par des tôles individuelles en un matériau ferromagnétique (figure 1).

6. Installation de distribution électrique haute tension, entièrement isolée et à blindage métallique, du type comportant plusieurs conducteurs de courant (3—5) s'étendant dans le blindage métallique (1) et formant, avec des noyaux de fer (6—8) disposés l'un à côté de l'autre et portant des enroulements secondaires, respectivement un transformateur d'intensité (12—14) à primaire unifilaire, un écran (50—52) en un matériau ferromagnétique étant associé à chaque noyau de fer, caractérisée par le fait que chaque écran (50, 51, 52) forme un anneau interrompu dont l'emplacement de l'interruption (53, 54, 55) est situé du côté éloigné du conducteur de courant voisin (3, 4, 5) (figure 4).

## Claims

1. A fully-insulated, metal-encased high-voltage switchgear comprising a plurality of conductors (3—5) running in the metal casing (1) and which, together with iron cores (6—8) which are arranged side by side and carry secondary windings, form a single conductor current transformer (12—14), to each iron core being assigned a screen (20—22; 43—45) made of ferromagnetic and/or electrically conductive material, characterised in that in the region of edges running at right angles to the axis of the conductors (3, 4, 5), at the axial ends of adjacent screens (e.g. 43, 44) there are arranged contact bridges (48, 49) which, together with the screens (43, 44), form a short-circuited turn.

2. A high-voltage switchgear as claimed in Claim 1, characterised in that each screen (20, 21, 22) is a plate (Figure 1).

3. A high-voltage switchgear as claimed in Claim 1, characterised in that each screen (43, 44, 45) forms a closed ring made of electrically-conductive material (Figures 3/4).

4. A high-voltage switchgear as claimed in Claim 1, characterised in that each screen forms an interrupted ring of ferromagnetic material, in which the point of interruption lies at the side facing away from the neighbouring conductor.

5. A high-voltage switchgear as claimed in one of the preceding Claims, characterised in that the screens (20, 21, 22) consist of individual sheets of ferromagnetic material (Figure 1).

6. A fully-insulated, metal-encased high-voltage switchgear comprising a plurality of conductors (3—5) running in the metal casing (1) and which, together with iron cores (6—8) which are arranged side by side and carry secondary windings, forms a single conductor current transformer (12—14), to each iron core being assigned a screen (50—52) made of ferromagnetic material, characterised in that each screen (50, 51, 52) forms an interrupted ring in which the point of interruption (53, 54, 55) lies at the side facing away from the neighbouring conductor (3, 4, 5) (Figure 4).

# FIG 1

0 011 590

FIG 3

FIG 4